# EUROPEAN PATENT SPECIFICATION

(11) **EP 4 366 993 B1**
(45) Date of publication and mention of the grant of the patent: **18.06.2025**
(21) Application number: 21743091.7
(22) Date of filing: 07.07.2021
(51) Int. Cl.: B60T 8/88, B60W 50/029, B60W 60/00

(54) **A METHOD OF CONTROLLING A BACKUP MOTION CONTROL SYSTEM**
VERFAHREN ZUR STEUERUNG EINES BACKUP-BEWEGUNGSSTEUERUNGSSYSTEMS
PROCÉDÉ DE COMMANDE D'UN SYSTÈME DE COMMANDE DE MOUVEMENT DE SECOURS

(43) Date of publication of application: 15.05.2024
(73) Proprietor: Volvo Autonomous Solutions AB, 405 08 Göteborg (SE)
(72) Inventor: HAGVALL, Linus, 418 74 GÖTEBORG (SE); BERGQUIST, Stefan, 417 26 GÖTEBORG (SE); NILSSON, Peter, 436 54 HOVÅS (SE)
(74) Representative: Kransell & Wennborg KB
(86) International application number: PCT/EP2021/068761
(87) International publication number: WO 2023/280394

(56) References cited:
- EP-A1- 3 090 907
- EP-A1- 3 363 698
- US-A1- 2013 253 793
- US-A1- 2016 090 100

## Description

### TECHNICAL FIELD

The present invention relates to a method of controlling a backup motion control system. The present invention also relates to a corresponding backup motion control system. The present invention is in particular advantageously implemented in an autonomous vehicle. Although the invention will mainly be directed to an autonomous vehicle in the form of a truck, the invention may also be applicable for other types of autonomous vehicles, such as e.g. working machines, cars, etc.

### BACKGROUND

The technology of autonomous vehicles is on a steady development and autonomous vehicles are being applied in a wide variety of applications. By means of autonomous vehicles, a physical operator of the vehicle can be superfluous which provides for a number of advantages, such as e.g. increasing the operational capacity of the vehicles, reduction of cost, and increased safety. In the latter case, the autonomous vehicles can be operated at e.g. hazardous work sites and thereby avoiding potential accidents for an operator otherwise operating the vehicle.

One important aspect for autonomous vehicles is that braking system(s) and steering system(s) operate as desired and in a more or less fail safe manner for the vehicle to operate as desired and to brake when needed.

For a manually operated vehicle, when an electric steering system fails to function as desired, the operator is still able to steer the vehicle by manually take control over the steering action. However, for an autonomous vehicle, where no operator is present, there is no such manual intervention available. As such, there is substantially no possibility to counteract a malfunctioning steering operation. This may potentially result in hazardous and dangerous situations for the vehicle.

A backup logic example for an autonomous vehicle in case of a malfunctioning steering system is disclosed by US 2016 090100 A1.

Further backup examples for manually operated vehicles are known from document US 2013 253793 A1, EP 33 63 698 A1 and EP 30 90 907 A1.

There is thus a desire to improve the steering systems for autonomous vehicles for further improving e.g. safety.

### SUMMARY

It is thus an object of the present invention to at least partially overcome the above described deficiencies.

According to a first aspect, there is provided a method of controlling a backup motion control system for an autonomous vehicle, the autonomous vehicle comprising a primary steering system for controlling steering operations of a pair of steerable wheels, wherein each of the steerable wheels comprises a wheel brake, the wheel brakes being connected to an anti-lock braking system for preventing the wheel brakes from being locked when the anti-lock braking system is arranged in an enabled state, the method comprising determining a current motion for the autonomous vehicle, the current motion being generated by a steering operation of the pair of steerable wheels caused by the primary steering system; comparing the current motion with a desired motion for the autonomous vehicle; and when a difference between the current motion and the desired motion exceeds a predetermined threshold limit: controlling the anti-lock braking system for the wheel brakes of the steerable wheels to be arranged in a disabled state; and engaging the wheel brakes of each of the steerable wheels.

The wording anti-lock braking system should be construed as a system which prevents the wheels from being locked during braking. When a wheel is locked during braking and the anti-lock braking system is arranged in the enabled state, the anti-lock braking system reduces the applied brake pressure or applied brake force on the wheel brake for the specific wheel such that the wheel is no longer locked. The enabled state is thus a state where the anti-lock braking system is activated and in operation. In the disabled state, the anti-lock braking system is thus inactivated and not in operation. When the anti-lock braking system is arranged in the disabled state, the wheels are able to be locked, i.e. the anti-lock braking system does not intervene in the braking action. The anti-lock braking system can be a conventional anti-braking system (ABS system), an electronic stability control system (ESP system), dynamic stability control system (DSC system), or other similar system. As will also be evident from the below disclosure, the anti-lock braking system can be configured to be arranged in the disabled state for one or more wheel brakes, while at the same time be arranged in the enabled state for one or more of the other wheel brakes on the vehicle. The anti-lock braking system may thus be arranged in an enabled state where intervention is enabled. The anti-lock braking system may also be arranged in a disabled state where the system is enabled but intervention is disabled, and a disabled state where the system is fully disabled, and hence intervention is hereby also disabled.

Further, the current motion for the autonomous vehicle should be construed as relating to the present heading for the vehicle. This could, as will be described below, be based on the current steering direction of the vehicle or lateral deviation from a lane of the road. As an option, the current motion can be a derivative of the current steering direction of the vehicle or the lateral deviation. The current motion can also be the current yaw rate of the vehicle. The desired motion is thus an intended and desired heading of the vehicle. In a similar vein as the current motion, the desired motion can be based on a desired steering direction or a lateral position of a lane of the road. The desired motion can also be a derivative of the desired steering direction or the lateral position. The desired motion can also be the desired yaw rate of the vehicle. The desired motion can be determined based on data received from a vehicle autonomous steering system, and be based on GPS data, etc.

The present invention is based on the unexpected insight that by arranging the anti-braking system in a disabled state and activate the wheel brake of the steerable wheels, the friction usage of the friction between the wheel tire surface and the road can be oversaturated. Hence, the invention enables for usage of substantially all friction with the braking action. Since the anti-lock braking system is disabled, the brake force is allowed to be larger than what would be possible with an enabled anti-lock braking system. Put it differently, when the anti-lock braking system is disabled and the brakes are locked, the wheel is changed from a rolling friction state to a wheel slip friction state, in which wheel slip friction state the braking distance is either longer or shorter compared to the rolling friction state. The friction parameter of the friction between the wheel and the road surface is in the wheel slip friction state often of a lower value compared to the corresponding friction parameter in the rolling friction state. Thus, the brake force uses the friction to provide a braking action in the longitudinal direction of the vehicle. As such, there is substantially no friction left to generate lateral wheel forces, i.e. the so-called lateral slip is increased. This will result in a situation where the vehicle is more or less unable to steer to the left hand side or the right hand side, whereby the vehicle will drive substantially straight ahead as seen in the current steering direction, i.e. in the tangential direction, until finally being stopped by the braking action. An advantage is thus that the effects of a malfunctioning steering system, regardless of the root cause for such malfunction, can be handled in an efficient manner which reduces the risk that the vehicle will leave the ego lane and drive off the road, etc. The above described method is thus advantageously operated as a backup when the ordinary, i.e. primary, steering system fails to function as desired and/or intended.

According to an example embodiment, the wheel brakes may be applied by a brake force, wherein a magnitude of the brake force is based on the difference between the current motion and the desired motion. Hence, in the case of a malfunction resulting in a severe deviation from the desired motion, the applied brake force is higher compared to a less severe deviation.

According to an example embodiment, the wheel brakes of each of the steerable wheels may be engaged by a brake force having a maximum brake force capability, the wheel brakes being engaged by a brake force corresponding to the maximum brake force capability when the difference between the current motion and the desired motion exceeds the predetermined threshold limit.

An advantage is that the maximum available brake force is applied to the wheel brakes of the steerable wheels. Thus, no intelligent software functionality is necessary that would otherwise calculate and apply a suitable brake force. In the example embodiment at hand, the backup motion control system simply applies the wheel brake as hard as possible.

According to an example embodiment, the current motion may be associated with a steering angle of the steerable wheels, and the desired path may be associated with a curve angle of a road currently operated by the autonomous vehicle, the method further comprising alternatingly engaging and disengaging the wheel brakes of each of the steerable wheels when the steering angle exceeds the curve angle. Hereby, the backup motion control system can continuously determine if, after a short braking event, the current motion has been compensated such that it substantially corresponds to the desired motion. The lateral forces of the steerable wheels can hereby be balanced, and the vehicle can be controlled back to its intended and desired motion.

According to an example embodiment, the autonomous vehicle may comprise at least one pair of non-steerable wheels, each of the non-steerable wheels comprising a wheel brake, wherein the method comprises engaging the wheel brakes of each of the non-steerable wheels when the difference between the current motion and the desired motion exceeds the predetermined threshold limit. An advantage is that the vehicle speed will be reduced more rapidly.

According to an example embodiment, the wheel brakes of the non-steerable wheels may be connected to a second anti-lock braking system, the method comprising controlling the second anti-lock braking system for the wheel brakes of the non-steerable wheels to be arranged in an enabled state for preventing the wheel brakes of the non-steerable wheels to lock when being engaged.

The second anti-lock braking system may form part of the above described anti-lock braking system, or be a separate anti-lock braking system. Thus, the wheel brakes of the non-steerable wheels may have an enabled anti-lock braking system at the same time as the anti-lock braking system of the steerable wheels is disabled. An advantage is that the non-steerable wheels will be prevented from being locked when operating the backup motion control system. In further detail, the wheel brakes of the non-steerable wheels operate in a conventional manner.

According to an example embodiment, the current motion may be a current steering direction for the autonomous vehicle, and the desired motion may be a desired path to follow by the autonomous vehicle. The desired path can, for example, be a predefined path of a confined work site, etc.

According to an example embodiment, the method may further comprise determining a current lateral position of the autonomous vehicle relative to a road lane of the desired path for autonomous vehicle; comparing the current lateral position with a predetermined maximum allowable deviation from a lateral center position of the road lane; and controlling the anti-lock braking system for the wheel brakes of the steerable wheels to be arranged in a disabled state and engaging the wheel brakes of each of the steerable wheels only when the current lateral position exceeds the predetermined maximum allowable deviation.

According to an example embodiment, the desired motion may be a curve direction of a road currently operated by the autonomous vehicle.

According to a second aspect, there is provided a backup motion control system for an autonomous vehicle comprising a pair of steerable wheels, wherein each of the steerable wheels comprises a wheel brake controllable by the backup motion control system, wherein the backup motion control system is connectable to an anti-lock braking system configured to prevent the wheel brakes from being locked when the anti-lock braking system is arranged in an enabled state, wherein the backup motion control system comprises a control unit comprising control circuitry configured to receive a signal indicative of a current motion for the autonomous vehicle; compare the current motion with a desired motion for the autonomous vehicle; and when a difference between the current motion and the desired motion exceeds a predetermined threshold limit: transmit a control signal to the anti-lock braking system, the control signal representing instructions causing the anti-lock braking system for the wheel brakes of the steerable wheels to be arranged in a disabled state; and control the wheel brakes of each of the steerable wheels to be engaged.

Effects and features of the second aspect are largely analogous to those described above in relation to the first aspect.

According to a third aspect, there is provided an autonomous vehicle comprising a pair of steerable wheels, a primary steering system configured to control a steering operation of the steerable wheels, and a backup motion control system according to the above described second aspect.

According to a fourth aspect, there is provided a computer program comprising program code means for performing the steps of any one of the embodiments described above in relation to the first aspect when the program code means is run on a computer.

According to a fifth aspect, there is provided a computer readable medium carrying a computer program means for performing the steps of any one of the embodiments described above in relation to the first aspect when the program means is run on a computer.

Effects and features of the third, fourth and fifth aspects are largely analogous to those described above in relation to the first aspect.

Further features of, and advantages will become apparent when studying the appended claims and the following description. The skilled person will realize that modifications are possible within the scope of the present invention, as defined by the appended claims.

### BRIEF DESCRIPTION OF THE DRAWINGS

The above, as well as additional objects, features, and advantages, will be better understood through the following illustrative and non-limiting detailed description of exemplary embodiments, wherein:
Fig. 1 is a lateral side view illustrating an example embodiment of an autonomous vehicle in the form of a truck;
Fig. 2 is a top view of the vehicle driving along a road curvature;
Fig. 3 is a schematic illustration from above depicting the vehicle in Fig. 1 exposed to a turning maneuver according to an example embodiment; and
Fig. 4 is a flow chart of a method of controlling a backup motion control system for the autonomous vehicle.

### DETAILED DESCRIPTION

The present invention will now be described more fully hereinafter with reference to the accompanying drawings, in which exemplary embodiments are shown. The invention may, however, be embodied in many different forms and should not be construed as limited to the embodiments set forth herein; rather, these embodiments are provided for thoroughness and completeness. Like reference character refer to like elements throughout the description.

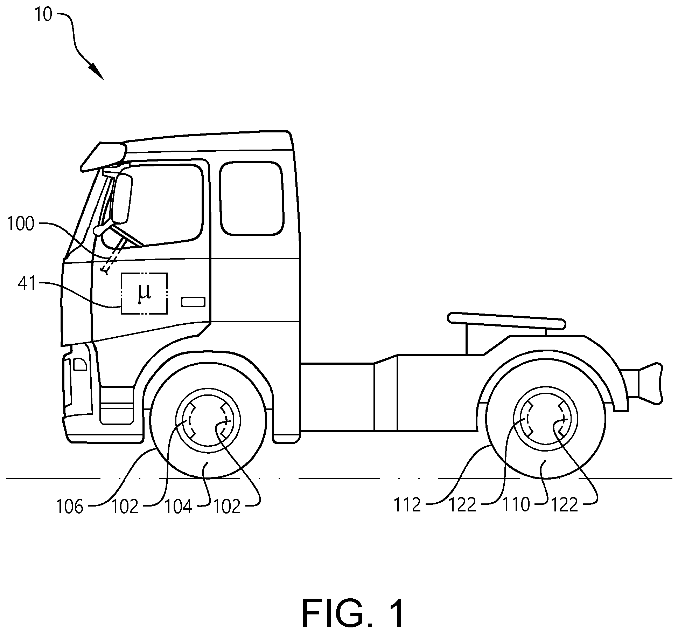

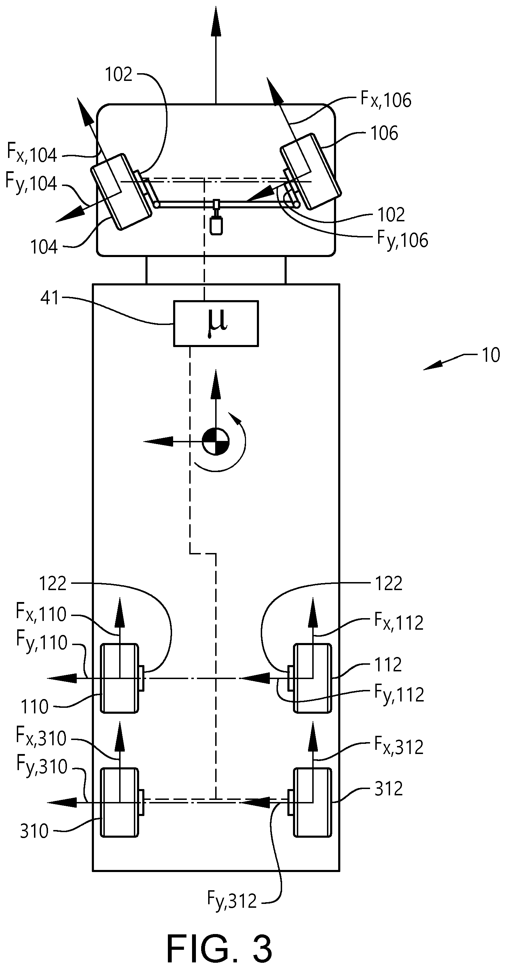

With particular reference to Fig. 1, there is depicted a vehicle 10 in the form of a truck. The vehicle 10 is an autonomous vehicle in which steering, and propulsion is autonomously controlled by a control unit 41. The autonomous vehicle thus comprises a steering system 100 including a pair of steerable wheels 104, 106. In Fig. 1, the steerable wheels 104, 106 are depicted as the front wheels, but could of course also be the rear wheels. The vehicle 10 also comprises a pair of non-steerable wheels 110, 112, which in Fig. 1 is exemplified as the rear wheels. It should be readily understood that the vehicle 10 may comprise additional rear wheels (see 310 and 312 in Fig. 3). Such additional rear wheels can, as illustrated in Fig. 3, be connected in front of the non-steerable wheels 110, 112, or behind the non-steerable wheels 110, 112. The control unit 41 is preferably connected, directly or indirectly, to a backup motion control system of the autonomous vehicle as will be described in further detail below. Steering operation of the steerable wheels 104, 106 is controlled by a primary steering system 100. The steering system 100 is depicted as comprising a steering wheel merely for illustrative purpose. Since the vehicle is an autonomous vehicle, the steering wheel may be superfluous.

The vehicle 10 also comprises a wheel brake 102 connected to each of the steerable wheels 102, 104, as well as a wheel brake 122 connected to the non-steerable wheels 110, 112. As will be described in further detail below, the wheel brakes are connected to an anti-lock braking system. The anti-lock braking system is configured to prevent the wheel brakes from being locked. The wheel brakes 102 of the steerable wheels 104, 106 may be connected to a first anti-lock braking system, while the wheel brakes 122 of the non-steerable wheels 110, 112 may be connected to a second anti-lock braking system which is controlled independently of the first anti-lock braking system. Alternatively, the wheel brakes 102 of the steerable wheels 104, 106 and the wheel brakes 122 of the non-steerable wheels are connected to one and the same anti-lock braking system. Such single anti-lock braking system can enable the anti-lock braking functionality for e.g. the wheel brakes 122 of the non-steerable wheels 110, 112, while at the same time disable the anti-lock braking functionality for e.g. the wheel brakes 102 of the steerable wheels 104, 106, and vice versa. The anti-lock braking system is thus arranged to be individually controllable for the wheel brakes. The anti-lock braking system may be an integrated control functionality of the control unit 41.

The control unit 41 may form part of an overall vehicle control system implemented on one or more vehicle unit computers (VUC). The VUC may be configured to execute vehicle control methods which are organized according to a layered functional architecture where some functionality may be comprised in a traffic situation management (TSM) domain in a higher layer. The TSM function plans driving operation with a time horizon of, e.g., 10 seconds or so. This time frame corresponds to, e.g., the time it takes for the vehicle to negotiate a curve. The vehicle maneuvers, planned and executed by the TSM, can be associated with acceleration profiles and curvature profiles which describe a desired vehicle velocity and turning for a given maneuver. The TSM continuously requests the desired acceleration profiles a_{req} and curvature profiles c_{req} from the VMM function which performs force allocation to meet the requests from the TSM in a safe and robust manner.

Furthermore, the control unit 41 may include a control circuitry, microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

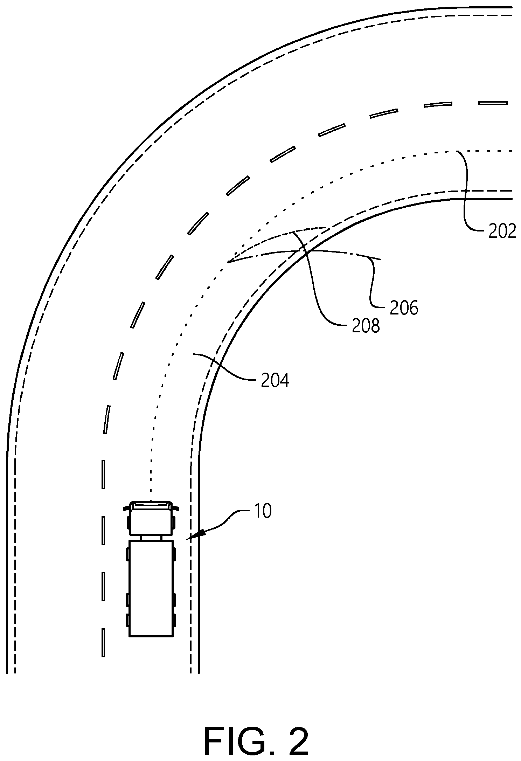

In order to describe the operation of the backup motion system in further detail, reference is made to Figs. 2 and 3. With initial reference to Fig. 2, which is a top view of the vehicle 10 driving along a road curvature. In particular, the vehicle 10 is aiming to follow a road trajectory 202, which in Fig. 2 is depicted as the lateral center of the lane 204 the vehicle 10 is following. Accordingly, the road trajectory 202 represents a desired motion for the vehicle 10. However, the current motion may deviate from the road trajectory 202, i.e. the vehicle 10 is, when operating the road curvature, not following the road trajectory and is instead following a current motion such that the vehicle is about to excessively leave the road. This is depicted by the current motion denoted as 206.

If the driving situation is as depicted by the current motion denoted as 206, the control unit 41 controls the anti-lock braking system for the wheel brakes 102 of the steerable wheels 104, 106 to be arranged in a disabled state. The control unit 41 also controls the wheel brakes 102 of the steerable wheels 104, 106 to be engaged. Since the anti-lock braking system is disabled, the wheel brakes can apply more or less full brake power and potentially be locked depending on the current friction between the wheel and road surface. Preferably, the wheel brakes of each of the steerable wheels 104, 106 are engaged by a brake force having a maximum brake force capability.

Reference is made to Fig. 3, which is a schematic illustration from above depicting an example embodiment of the vehicle in Fig. 1 exposed to a turning maneuver according to an example embodiment. During operation as illustrated in Fig. 2, the front steerable wheels 104, 106 is turning the vehicle. The front steerable wheels 104, 106 are exposed to a longitudinal wheel force F_{x,104}, F_{x,106} and a lateral wheel force F_{y,104}, F_{y,106}, respectively. In a similar vein, the non-steerable wheels 110, 112 are also exposed to a longitudinal wheel force F_{x,110}, F_{x,112} and a lateral wheel force F_{y,110}, F_{y,112}, respectively. The embodiment depicted in Fig. 3 also comprises a rearmost pair of wheels 310, 312. The rearmost pair of wheels 310, 312 may be either steerable or non-steerable. The wheel brakes of the rearmost pair of wheels 310, 312 are also exposed to a longitudinal wheel force F_{x,310}, F_{x,312} and a lateral wheel force F_{y,310}, F_{y,312}, respectively.

When the anti-lock braking system for the wheel brakes 102 of the steerable wheels 104, 106 are arranged in the disabled state, and the wheel brakes of each of the steerable wheels 104, 106 are engaged by a brake force having a maximum brake force capability, substantially all brake force will be in the longitudinal direction, i.e. the lateral wheel force F_{y,104}, F_{y,106} will be substantially zero. Hereby, and with reference to Fig. 2, the vehicle will be understeered and follow the tangential direction, thereby reducing the steering angle, and prevent the vehicle from leaving the road. In detail, the friction between the steerable wheels 104, 106 and the road will be more or less saturated in the longitudinal direction of the steerable wheels 104, 106.

Preferably, the wheel brakes 122 of the non-steerable wheels 110, 112 are also engaged with the anti-lock braking system for these brakes enabled. This will assist in reducing the speed of the vehicle to a final stand-still. In such situation, the non-steerable wheels 110, 112 are still exposed to the lateral forces F_{y,110}, F_{y,112}.

Fig. 2 further depicts another steering operation, indicated with reference numeral 208, which is less severe compared to the above described operating condition where the vehicle follows the trajectory indicated by reference numeral 206. Nevertheless, steering operation resulting in the trajectory denoted by reference numeral 208 is an indication of a malfunctioning steering system. Since this steering operation is less severe, the wheel brakes can be applied with a lower brake force compared to the above described brake force applied when the vehicle followed trajectory 206. The magnitude of the applied brake force can thus be based on the difference between the current motion and the desired motion, with the anti-lock braking system for the wheel brakes 102 of the steerable wheels 104, 106 disabled. According to another example, the wheel brakes 102 of the steerable wheels 104, 106 may be alternatingly engaged and disengaged based on a difference between the current motion and the desired motion. The current motion may preferably be a current steering direction for the vehicle 10, and the desired motion may be a desired path to follow by the vehicle 10.

According to an example embodiment, the control unit 41 may be configured to determine a difference between the current motion and the desired motion. The control unit may further determine or predict a coming trajectory of the vehicle 10 during braking with the anti-lock braking system enabled, as well as to determine or predict a coming trajectory of the vehicle 10 with the anti-lock braking system disabled. The control unit can compare the coming trajectory with the enabled anti-lock braking system and the coming trajectory with the disabled anti-lock braking system. The comparison may preferably be made in relation to e.g. a road map, or equivalent. Based on the comparison and the road map data, the control unit determines whether to enable or disable the anti-lock braking system, and controls the wheel brakes to be applied.

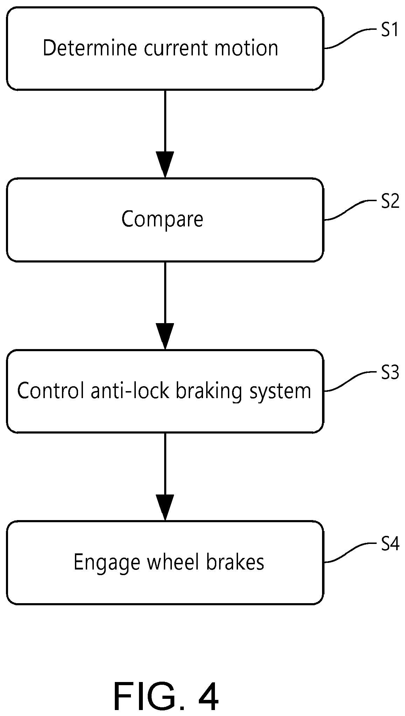

In order to sum up, reference is made to Fig. 4 which is a flow chart of a method of controlling the backup motion control system for the vehicle. During operation, as depicted in Fig. 2, the control unit 41 determines S1 a current motion of the vehicle 10. The current motion is generated by a steering operation of the pair of steerable wheels 104, 106 caused by the primary steering system 100.

The control unit 41 compares S2 the current motion with a desired motion for the vehicle 10. The current motion may thus not correspond to the desired motion but may take, as an example, the form as depicted with reference numerals 206 or 208 in Fig. 2.

When a difference between the current motion and the desired motion exceeds a predetermined threshold limit, the control unit transmits a control signal to the anti-lock braking system such that the anti-lock braking system for the wheel brakes of the steerable wheels is arranged in the disabled state. In further detail, the transmitted control signal represents instructions causing the anti-lock braking system for the wheel brakes of the steerable wheels to be arranged in a disabled state. Hence, the control unit controls (S3) the anti-lock braking system to be arranged in the disabled state. The control unit 41 also controls the wheel brakes 102 to be engaged (S4). As described above, the vehicle will not continue to follow the erroneous path, but instead follow a tangential direction from the point in time when the brakes are engaged, while at the same time reduce the speed until the vehicle is arranged in a stand-still operation.

It is to be understood that the present disclosure is not limited to the embodiments described above and illustrated in the drawings; rather, the skilled person will recognize that many changes and modifications may be made within the scope of the appended claims.

## Claims

1. A method of controlling a backup motion control system for an autonomous vehicle, the autonomous vehicle comprising a primary steering system for controlling steering operations of a pair of steerable wheels, wherein each of the steerable wheels comprises a wheel brake, the wheel brakes being connected to an anti-lock braking system for preventing the wheel brakes from being locked when the anti-lock braking system is arranged in an enabled state, the method comprising:
- determining (S1) a current motion for the autonomous vehicle, the current motion being generated by a steering operation of the pair of steerable wheels caused by the primary steering system;
- comparing (S2) the current motion with a desired motion for the autonomous vehicle;
**characterized by**, when a difference between the current motion and the desired motion exceeds a predetermined threshold limit,
- controlling (S3) the anti-lock braking system for the wheel brakes of the steerable wheels to be arranged in a disabled state; and
- engaging (S4) the wheel brakes of each of the steerable wheels.

2. The method according to claim 1, wherein the wheel brakes are applied by a brake force, wherein a magnitude of the brake force is based on the difference between the current motion and the desired motion.

3. The method according to any one of claims 1 or 2, wherein the wheel brakes of each of the steerable wheels are engaged by a brake force having a maximum brake force capability, the wheel brakes being engaged by a brake force corresponding to the maximum brake force capability when the difference between the current motion and the desired motion exceeds the predetermined threshold limit.

4. The method according to any one of the preceding claims, wherein the current motion is associated with a steering angle of the steerable wheels, and the desired motion is associated with a curve angle of a road currently operated by the autonomous vehicle, the method further comprising:
- alternatingly engaging and disengaging the wheel brakes of each of the steerable wheels when the steering angle exceeds the curve angle.

5. The method according to any one of the preceding claims, wherein the autonomous vehicle comprises at least one pair of non-steerable wheels, each of the non-steerable wheels comprising a wheel brake, wherein the method comprises:
- engaging the wheel brakes of each of the non-steerable wheels when the difference between the current motion and the desired motion exceeds the predetermined threshold limit.

6. The method according to claim 5, wherein the wheel brakes of the non-steerable wheels are connected to a second anti-lock braking system, the method comprising:
- controlling the second anti-lock braking system for the wheel brakes of the non-steerable wheels to be arranged in an enabled state for preventing the wheel brakes of the non-steerable wheels to lock when being engaged.

7. The method according to any one of the preceding claims, wherein the current motion is a current steering direction for the autonomous vehicle, and the desired motion is a desired path to follow by the autonomous vehicle.

8. The method according to claim 7, further comprising:
- determining a current lateral position of the autonomous vehicle relative to a road lane of the desired path for autonomous vehicle;
- comparing the current lateral position with a predetermined maximum allowable deviation from a lateral center position of the road lane; and
- controlling the anti-lock braking system for the wheel brakes of the steerable wheels to be arranged in a disabled state and engaging the wheel brakes of each of the steerable wheels only when the current lateral position exceeds the predetermined maximum allowable deviation.

9. The method according to any one of the preceding claims, wherein the desired motion is a curve direction of a road currently operated by the autonomous vehicle.

10. A backup motion control system for an autonomous vehicle (10) comprising a pair of steerable wheels (104, 106) wherein each of the steerable wheels comprises a wheel brake (102) controllable by the backup motion control system, wherein the backup motion control system is connectable to an anti-lock braking system configured to prevent the wheel brakes from being locked when the anti-lock braking system is arranged in an enabled state, wherein the backup motion control system comprises a control unit (41) comprising control circuitry configured to:
- receive a signal indicative of a current motion for the autonomous vehicle;
- compare the current motion with a desired motion for the autonomous vehicle;
**characterised in that** the control circuitry is further configured to, when a difference between the current motion and the desired motion exceeds a predetermined threshold limit,
∘ transmit a control signal to the anti-lock braking system, the control signal representing instructions causing the anti-lock braking system for the wheel brakes of the steerable wheels to be arranged in a disabled state; and
∘ control the wheel brakes of each of the steerable wheels to be engaged.

11. An autonomous vehicle comprising a pair of steerable wheels, a primary steering system (100) configured to control a steering operation of the steerable wheels, and a backup motion control system according to claim 10.

12. A computer program comprising program code means for performing the steps of any one of claims 1 - 9 when the program code means is run on a computer.

13. A computer readable medium carrying a computer program means for performing the steps of any one of claims 1 - 9 when the program means is run on a computer.

## Patentansprüche

1. Verfahren zur Steuerung eines Backup-Bewegungssteuerungssystems für ein autonomes Fahrzeug, das autonome Fahrzeug umfassend ein primäres Lenksystem zur Steuerung von Lenkvorgängen eines Paars lenkbarer Räder, wobei jedes der lenkbaren Räder eine Radbremse umfasst, wobei die Radbremsen mit einem Antiblockiersystem verbunden sind, um zu verhindern, dass die Radbremsen blockiert werden, wenn das Antiblockiersystem in einem aktivierten Zustand angeordnet ist, das Verfahren umfassend:
- Bestimmen (S1) einer aktuellen Bewegung für das autonome Fahrzeug, wobei die aktuelle Bewegung durch einen Lenkvorgang des Paars lenkbarer Räder erzeugt wird, der durch das primäre Lenksystem verursacht wird;
- Vergleichen (S2) der aktuellen Bewegung mit einer gewünschten Bewegung des autonomen Fahrzeugs;
**gekennzeichnet durch**, wenn eine Differenz zwischen der aktuellen Bewegung und der gewünschten Bewegung einen vorbestimmten Schwellenwert überschreitet:
- Steuern (S3) des Antiblockiersystems für die Radbremsen der lenkbaren Räder, um sie in einen deaktivierten Zustand zu versetzen; und
- Betätigen (S4) der Radbremsen an jedem der lenkbaren Räder.

2. Verfahren nach Anspruch 1, wobei die Radbremsen durch eine Bremskraft betätigt werden, wobei eine Größe der Bremskraft auf der Differenz zwischen der aktuellen Bewegung und der gewünschten Bewegung basiert.

3. Verfahren nach einem der Ansprüche 1 oder 2, wobei die Radbremsen jedes der lenkbaren Räder mit einer Bremskraft betätigt werden, die ein maximales Bremskraftvermögen aufweist, wobei die Radbremsen mit einer Bremskraft betätigt werden, die dem maximalen Bremskraftvermögen entspricht, wenn die Differenz zwischen der aktuellen Bewegung und der gewünschten Bewegung den vorbestimmten Schwellenwert überschreitet.

4. Verfahren nach einem der vorhergehenden Ansprüche, wobei die aktuelle Bewegung einem Lenkwinkel der lenkbaren Räder zugeordnet ist und die gewünschte Bewegung einem Kurvenwinkel einer Straße zugeordnet ist, die das autonome Fahrzeug gerade befährt, das Verfahren ferner umfassend:
- abwechselndes Betätigen und Lösen der Radbremsen jedes der lenkbaren Räder, wenn der Lenkwinkel den Kurvenwinkel überschreitet.

5. Verfahren nach einem der vorhergehenden Ansprüche, wobei das autonome Fahrzeug mindestens ein Paar nicht lenkbarer Räder umfasst, wobei jedes der nicht lenkbaren Räder eine Radbremse umfasst, wobei das Verfahren umfasst:
- Betätigen der Radbremsen jedes der nicht lenkbaren Räder, wenn die Differenz zwischen der aktuellen Bewegung und der gewünschten Bewegung den vorbestimmten Schwellenwert überschreitet.

6. Verfahren nach Anspruch 5, wobei die Radbremsen der nicht lenkbaren Räder mit einem zweiten Antiblockiersystem verbunden sind, das Verfahren umfassend:
- Steuern des zweiten Antiblockiersystems für die Radbremsen der nicht lenkbaren Räder, das in einem aktivierten Zustand angeordnet wird, um zu verhindern, dass die Radbremsen der nicht lenkbaren Räder blockieren, wenn sie betätigt werden.

7. Verfahren nach einem der vorhergehenden Ansprüche, wobei die aktuelle Bewegung eine aktuelle Lenkrichtung für das autonome Fahrzeug ist und die gewünschte Bewegung ein gewünschter Pfad ist, dem das autonome Fahrzeug folgen soll.

8. Verfahren nach Anspruch 7, ferner umfassend:
- Bestimmen einer aktuellen seitlichen Position des autonomen Fahrzeugs relativ zu einer Fahrspur des gewünschten Pfades für das autonome Fahrzeug;
- Vergleichen der aktuellen seitlichen Position mit einer vorbestimmten maximal zulässigen Abweichung von einer seitlichen Mittelposition der Fahrspur; und
- Steuern des Antiblockiersystems für die Radbremsen der lenkbaren Räder, so dass es in einem deaktivierten Zustand angeordnet ist und die Radbremsen jedes der lenkbaren Räder nur dann betätigt werden, wenn die aktuelle seitliche Position die vorbestimmte maximal zulässige Abweichung überschreitet.

9. Verfahren nach einem der vorhergehenden Ansprüche, wobei die gewünschte Bewegung eine Kurvenrichtung einer Straße ist, die das autonome Fahrzeug gerade fährt.

10. Backup-Bewegungssteuerungssystem für ein autonomes Fahrzeug (10), umfassend ein Paar lenkbare Räder (104, 106), wobei jedes der lenkbaren Räder eine Radbremse (102) umfasst, die durch das Backup-Bewegungssteuerungssystem steuerbar ist, wobei das Backup-Bewegungssteuerungssystem mit einem Antiblockiersystem verbunden werden kann, das konfiguriert ist, um zu verhindern, dass die Radbremsen blockiert werden, wenn das Antiblockiersystem in einem aktivierten Zustand angeordnet ist, wobei das Backup-Bewegungssteuerungssystem eine Steuereinheit (41) umfasst, die eine Steuerschaltung umfasst, die konfiguriert ist, zum:
- Empfangen eines Signals, das eine aktuelle Bewegung des autonomen Fahrzeugs anzeigt;
- Vergleichen der aktuellen Bewegung mit einer gewünschten Bewegung des autonomen Fahrzeugs;
**dadurch gekennzeichnet, dass** die Steuerschaltung ferner konfiguriert ist, wenn eine Differenz zwischen der aktuellen Bewegung und der gewünschten Bewegung einen vorbestimmten Schwellenwert überschreitet, zum:
∘ Übertragen eines Steuersignals an das Antiblockiersystem, wobei das Steuersignal Anweisungen darstellt, die bewirken, dass das Antiblockiersystem für die Radbremsen der lenkbaren Räder in einen deaktivierten Zustand versetzt wird; und
∘ Steuern der Radbremsen jedes lenkbaren Rades, um sie zu betätigen.

11. Autonomes Fahrzeug mit einem Paar lenkbarer Räder, einem primären Lenksystem (100), das konfiguriert ist, um einen Lenkvorgang der lenkbaren Räder zu steuern, und ein Backup-Bewegungssteuerungssystem nach Anspruch 10.

12. Computerprogramm, das Programmcodemittel zum Durchführen der Schritte nach einem der Ansprüche 1-9 umfasst, wenn das Programmcodemittel auf einem Computer ausgeführt wird.

13. Computerlesbares Medium mit einem Computerprogramm, das Programmcodemittel zum Durchführen der Schritte nach einem der Ansprüche 1-9 umfasst, wenn das Programmmittel auf einem Computer ausgeführt wird.

## Revendications

1. Procédé de commande d'un système de commande de mouvement de secours pour véhicule autonome, le véhicule autonome comprenant un système de direction principal pour commander les manœuvres de direction d'une paire de roues directrices, dans lequel chacune des roues directrices comprend un frein de roue, les freins de roue étant raccordés à un système de freinage antiblocage pour empêcher le blocage des freins de roue lorsque le système de freinage antiblocage est activé, le procédé comprenant :
- la détermination (S1) d'un mouvement en cours pour le véhicule autonome, le mouvement en cours étant généré par une manœuvre de direction de la paire de roues directrices provoquée par le système de direction primaire ;
- la comparaison (S2) du mouvement en cours avec un mouvement souhaité pour le véhicule autonome ;
**caractérisé par**, lorsqu'une différence entre le mouvement en cours et le mouvement souhaité dépasse une limite seuil prédéterminée :
- la commande (S3) du système de freinage antiblocage pour les freins des roues directrices à mettre hors service ; et
- le serrage (S4) des freins de roue de chacune des roues directrices.

2. Procédé selon la revendication 1, dans lequel les freins de roue sont appliqués par une force de freinage, une amplitude de la force de freinage étant basée sur la différence entre le mouvement en cours et le mouvement souhaité.

3. Procédé selon l'une quelconque des revendications 1 ou 2, dans lequel les freins de roue de chacune des roues directrices sont engagés par une force de freinage ayant une capacité de force de freinage maximale, les freins de roue étant engagés par une force de freinage correspondant à la capacité de force de freinage maximale lorsque la différence entre le mouvement en cours et le mouvement souhaité dépasse la limite seuil prédéterminée.

4. Procédé selon l'une quelconque des revendications précédentes, dans lequel le mouvement en cours est associé à un angle de braquage des roues directrices, et le mouvement souhaité est associé à un angle de virage d'une route en cours ment parcourue par le véhicule autonome, le procédé comprenant en outre :
- l'enclenchement et le désenclenchement alternatifs des freins de roue de chacune des roues directrices lorsque l'angle de braquage dépasse l'angle de virage.

5. Procédé selon l'une quelconque des revendications précédentes, dans lequel le véhicule autonome comprend au moins une paire de roues non directrices, chacune des roues non directrices comprenant un frein de roue, le procédé comprenant :
- le serrage des freins de chacune des roues non directrices lorsque la différence entre le mouvement en cours et le mouvement souhaité dépasse la limite seuil prédéterminée.

6. Procédé selon la revendication 5, dans lequel les freins de roue des roues non directrices sont reliés à un second système de freinage antiblocage, le procédé comprenant :
- la commande du deuxième système de freinage antiblocage des freins des roues non directrices, qui doit être mis dans un état activé pour empêcher le blocage des freins des roues non directrices lorsqu'ils sont serrés.

7. Procédé selon l'une quelconque des revendications précédentes, dans lequel le mouvement en cours est un sens de direction en cours pour le véhicule autonome, et le mouvement souhaité est un parcours souhaité à suivre par le véhicule autonome.

8. Procédé selon la revendication 7, comprenant en outre
- la détermination d'une position latérale en cours du véhicule autonome par rapport à une voie de circulation du parcours souhaité pour le véhicule autonome ;
- la comparaison de la position latérale en cours avec un écart maximal admissible prédéterminé par rapport à une position centrale latérale de la voie de circulation ; et
- la commande du système de freinage antiblocage pour les freins de roue des roues directrices qui doivent être mis hors service et le serrage des freins de roue de chacune des roues directrices uniquement lorsque la position latérale en cours dépasse l'écart maximal admissible prédéterminé.

9. Procédé selon l'une quelconque des revendications précédentes, dans lequel le mouvement souhaité est une direction de virage d'une route en cours actuellement parcourue par le véhicule autonome.

10. Système de commande de mouvement de secours pour véhicule autonome (10) comprenant une paire de roues directrices (104, 106), chacune des roues directrices comprenant un frein de roue (102) pouvant être commandé par le système de commande de mouvement de secours, le système de commande de mouvement de secours pouvant être connecté à un système de freinage antiblocage configuré pour empêcher les freins de roue de se bloquer lorsque le système de freinage antiblocage est mis dans un état activé, le système de commande de mouvement de secours comprenant une unité de commande (41) comportant un circuit de commande configuré pour :
- recevoir un signal indiquant un mouvement en cours pour le véhicule autonome ;
- comparer le mouvement en cours avec un mouvement souhaité pour le véhicule autonome ;
**caractérisé en ce que** le circuit de commande est en outre configuré pour, lorsqu'une différence entre le mouvement en cours et le mouvement souhaité dépasse une limite de seuil prédéterminée,
- transmettre un signal de commande au système de freinage antiblocage, le signal de commande représentant des instructions faisant en sorte que le système de freinage antiblocage des freins de roues directrices soit mis hors service ; et
- commander le serrage des freins de chacune des roues directrices.

11. Véhicule autonome comprenant une paire de roues directrices, un système de direction primaire (100) configuré pour commander une manœuvre de direction des roues directrices, et un système de commande de mouvement de secours selon la revendication 10.

12. Programme informatique comprenant un moyen de code de programme pour exécuter les étapes de l'une quelconque des revendications 1 à 9 lorsque le moyen de code de programme est exécuté sur un ordinateur.

13. Support lisible par ordinateur comportant un moyen de programme informatique pour exécuter les étapes de l'une quelconque des revendications 1 à 9 lorsque le moyen de programme est exécuté sur un ordinateur.
